# EUROPÄISCHE PATENTSCHRIFT

(11) **EP 2 639 364 B1**
(45) Veröffentlichungstag und Bekanntmachung des Hinweises auf die Patenterteilung: **02.05.2018**
(21) Anmeldenummer: 13158717.2
(22) Anmeldetag: 12.03.2013
(51) Int. Cl.: E03C 1/04

(54) **Armaturengrundkörper für eine Sanitärarmatur**
Base body for a sanitary fitting
Corps de base pour une robinetterie sanitaire

(30) Priorität: 16.03.2012 DE 102012204139
(43) Veröffentlichungstag der Anmeldung: 18.09.2013
(73) Patentinhaber: Hansgrohe SE, 77761 Schiltach (DE)
(72) Erfinder: Armbruster, Jochen, 77709 Wolfach (DE); Flieger, Horst, 77761 Schiltach (DE); Kronenbitter, Bernd, 77787 Nordrach (DE)
(74) Vertreter: Patentanwälte Ruff, Wilhelm, Beier, Dauster & Partner mbB

(56) Entgegenhaltungen:
- WO-A1-2005/111325
- JP-A- 2008 231 885
- US-A1- 2006 130 918

## Beschreibung

Die Erfindung bezieht sich auf einen Armaturengrundkörper für eine Sanitärarmatur.

Sanitärarmaturen zur Anbringung auf Putz oder unter Putz haben typischerweise einen Armaturenkörper, in den mindestens zwei mit Abstand angeordnete Anschlüsse führen. Mit diesen Anschlüssen wird der Armaturenkörper mit den Enden zweier Wasserleitungen verbunden, die aus der Wand herausführen. Üblicherweise ist der Armaturengrundkörper horizontal angeordnet. Es gibt aber auch senkrechte Anordnungen. Der Armaturengrundkörper enthält in der Regel ein Mischventil, das vorzugsweise ein Thermostatventil ist, und ein Mengenregulierventil. In dem Armaturengrundkörper sind Kanäle gebildet, die die Wasserführungen zu einem Auslauf bilden. Dabei besteht der Armaturengrundkörper häufig aus einer Vielzahl von Teilen, die zusammen gebaut werden müssen und die durch Dichtungen die einzelnen Wasserführungen voneinander trennen.

Es ist bereits eine sanitäre Mischbatterie für den Wandanschluss bekannt, bei der der Armaturengrundkörper in einer zylindrischen Umhüllung angeordnet ist, die horizontal verläuft. Der Armaturengrundkörper weist einen Abstand von der Wand auf (DE 3941106 C2).

Bei einer weiteren Mischbatterie sind die Wasserführungen zum Teil in dem Zwischenraum zwischen einem Armaturengrundkörper und einer diesen umgebenden Hülle gebildet. Auch hier sind Dichtungen zum Trennen der einzelnen Wasserführungen voneinander vorgesehen. Auch dieser Armaturengrundkörper weist einen Abstand von der Wand auf, aus der die Zuleitungen herausführen (EP 0647808 B1).

Ebenfalls bekannt ist ein Gehäuse für eine Wand-Bademischbatterie, bei dem die eigentliche Mischbatterie auf einer Außenseite des Gehäuses aufgesetzt wird. Das Gehäuse ist einstückig ausgebildet und weist große Innenräume für die Wasserführungen auf (DE 3406987 C2).

Üblicherweise sind solche Sanitärarmaturen mindestens im Bereich ihres Armaturengrundkörpers aus Metall hergestellt.

Verschiedene weitere herkömmliche Armaturengrundkörper, bei denen in einem Anschlussblock einseitig offene Kanäle gebildet sind, die durch ein mit dem Anschlussblock verbindbares weiteres Bauteil des Armaturengrundkörpers abgedeckt werden, sind in den Offenlegungsschriften WO 2005/111325 A1, US 2006/0130918 A1, welches als nächstliegender Stand der Technik betrachtet wird, und JP 2008-231885 A offenbart.

Der Erfindung liegt die Aufgabe zu Grunde, einen einfach aufgebauten und Platz sparenden Armaturengrundkörper zu schaffen, der sich insbesondere auch zur Herstellung aus Kunststoff eignet.

Zur Lösung dieser Aufgabe schlägt die Erfindung einen Armaturengrundkörper für eine Sanitärarmatur mit den im Anspruch 1 genannten Merkmalen vor. Weiterbildungen der Erfindung sind Gegenstand von Unteransprüchen.

Durch die Anordnung von in Richtung auf die Trennfläche zwischen den beiden Teilen des Armaturengrundkörpers offenen Kanälen, die in Richtung auf die Trennfläche nicht hinterschnitten sind und durch einen Deckelblock geschlossen werden, vereinfacht sich die Herstellung. Insbesondere ist es möglich, mit einfach aufgebauten Formen für die Herstellung aus Kunststoff auszukommen. Aber auch eine Herstellung aus Metall ist mit diesem Prinzip möglich.

Der Armaturengrundkörper weist zwei Anschlüsse zur Verbindung mit je einer Wasserleitung auf, deren Abstand dem üblichen Abstand der Wasserleitungen in der Wand entspricht. Der Armaturengrundkörper kann so ausgebildet sein, dass er einen Abstand von der Wand aufweist, oder aber auch so, dass er dicht vor der Wand angeordnet ist.

In Weiterbildung der Erfindung kann vorgesehen sein, dass die Ventileinrichtung, die in einer Aufnahme angeordnet ist, ein Mischventil ist, das über zwei Einlasskanäle mit jeweils einem Anschluss hydraulisch verbunden ist. Es kann dabei vorgesehen sein, dass die Aufnahme für das Mischventil in der Nähe eines Anschlusses angeordnet ist, so dass eine einfache Durchbrechung zwischen den beiden Aufnahmen den einen der beiden Einlasskanäle bildet. Der zweite Einlasskanal führt von dem anderen Anschluss durch den Armaturengrundkörper zu der Aufnahme für das Thermostatventil. Von dem Thermostatventil führt ein Mischwasserkanal zu einer zweiten Aufnahme, in der ein Mengenregulierventil angeordnet ist. Von diesem Mengenregulierventil führt ein Auslasskanal zu dem Auslass aus der Sanitärarmatur.

Mit Ausnahme der direkten Durchbrechung zwischen der Aufnahme für das Thermostatventil und dem zugeordneten Einlass können insbesondere alle diese Kanäle offen sein.

In nochmaliger Weiterbildung der Erfindung kann vorgesehen sein, dass mindestens ein Kanal als Flachkanal mit zwei mindestens angenähert
parallelen Wänden ausgebildet ist. Die Annäherung an die Parallelität soll dabei die Möglichkeit des Entformens berücksichtigen, falls der Armaturengrundkörper durch einen Gussvorgang oder Spritzguss hergestellt werden soll.

Insbesondere kann vorgesehen sein, dass die Längsrichtung des Querschnitts des Flachkanals senkrecht zu der Trennfläche zwischen dem Deckelblock und dem Anschlussblock des Armaturengrundkörpers verläuft. Die Trennfläche kann vorzugsweise ungefähr eben sein.

In Weiterbildung der Erfindung kann vorgesehen sein, dass mehrere Kanäle zu der gleichen Seite des Anschlussblocks des Armaturengrundkörpers hin offen sind.

Es kann erfindungsgemäß vorgesehen sein, dass mehrere zu der gleichen Seite des Anschlussblocks hin offene Kanäle durch einen einzigen Deckel abgeschlossen sind.

Eine weitere von der Erfindung vorgeschlagene Möglichkeit besteht darin, dass Kanäle zu zwei verschiedenen Seiten des Anschlussblocks hin offen sind. In diesem Fall ist die Verwendung zweier Deckel sinnvoll.

Erfindungsgemäß kann vorgesehen sein, dass dann, wenn Kanäle zu zwei verschiedenen Seiten des Anschlussblocks hin offen sind, diese beiden Seiten des Anschlussblocks einander gegenüber liegen, insbesondere auch parallel zueinander verlaufen.

In nochmaliger Weiterbildung der Erfindung kann vorgesehen sein, dass die Achsen der Aufnahmen für die Ventileinrichtung in der gleichen Ebene liegen wie die Achse der Anschlüsse. Auf diese Weise kann ein sehr flacher Armaturengrundkörper hergestellt werden, der auch zu einer sehr flachen Armatur führt.

Dabei wird die Tatsache berücksichtigt, dass die beiden Anschlüsse für die Wasserleitungen aufgrund der Anordnung der Wasserleitungen in der Wand grundsätzlich schon horizontal angeordnet sind.

In Weiterbildung der Erfindung kann vorgesehen sein, dass die Aufnahmen für die Ventileinrichtung derart im Armaturengrundkörper bzw. in dessen Anschlussblock angeordnet bzw. ausgebildet sind, dass ihre Achsen senkrecht zu den Achsen der Anschlüsse verlaufen. Wenn also, wie üblich, die Aufnahmen an der Rückseite des Armaturengrundkörpers parallel zueinander angeordnet sind, so können die Aufnahmen für die Ventileinrichtung so angeordnet sein, dass diese von rechts und links her bedient werden können.

Es ist aber auch denkbar, dass sie von unten oder oben bedient werden können. Ebenfalls möglich ist es, dass die Ventilachsen schief im Raum stehen.

In nochmaliger Weiterbildung der Erfindung kann vorgesehen sein, dass die Kanäle, insbesondere die Flachkanäle, kreuzungsfrei verlaufen. Es kann vorgesehen sein, dass die Kanäle mindestens teilweise parallel zueinander verlaufen.

Der parallele Verlauf der Flachkanäle kann dazu ausgenutzt werden, dass der Armaturengrundkörper Platz sparend ausgebildet ist.

In nochmaliger Weiterbildung der Erfindung kann vorgesehen sein, dass die Wände der Kanäle in dem Armaturengrundkörper durch Zwischenräume getrennt sind, so dass sie einen Abstand voneinander aufweisen. Dies kann bei den in einem solchen Armaturengrundkörper auftretenden Temperaturunterschieden Vorteile haben.

Zur Verstärkung kann vorgesehen sein, dass die Wände der Kanäle an der Außenseite mit Rippen versehen sind, wobei die Rippen gegebenenfalls auch zwei Wände benachbarter Kanäle miteinander verbinden.

Erfindungsgemäß kann vorgesehen sein, dass der Anschlussblock des Armaturengrundkörpers und/oder der Deckelblock einstückig ausgebildet ist. Der Armaturengrundkörper besteht dann gegebenenfalls aus insgesamt zwei Teilen, die sich dann sehr einfach zusammensetzen lassen.

Erfindungsgemäß kann vorgesehen sein, dass das Gehäuse ganz oder teilweise aus Metall besteht.

Als besonders bevorzugt hat es sich herausgestellt, das Gehäuse ganz oder teilweise aus Kunststoff herzustellen. Dies hat insbesondere Vorteile, wenn eine Berührung des Trinkwassers mit Metall verhindert werden muss.

Bei den Anschlüssen für die Wasserleitung kann erfindungsgemäß vorgesehen sein, dass die Anschlüsse als Aufnahmen zur Verbindung mit S-Anschlüssen ausgebildet sind. Derartige S-Anschlüsse sind allgemein bekannt. Die Aufnahmen können dann als einfache zylindrische Hohlräume ausgebildet sein mit Möglichkeiten der Verriegelung an dem S-Anschluss.

Es ist aber auch denkbar, dass der Armaturengrundkörper bei einem oder beiden Anschlüssen einen Einsatz aufweist, der zur Aufnahme des S-Anschlusses ausgebildet ist. Der Einsatz kann aus dem gleichen Stoff bestehen wie der Armaturengrundkörper oder aber aus einem anderen Material, beispielsweise bei einem aus Kunststoff bestehenden Armaturengrundkörper als Metalleinsatz ausgebildet sein. Er kann bei der Herstellung des Armaturengrundkörpers umspritzt worden sein oder aber auch nachträglich eingesetzt werden. Bei Bedarf können alle Anschlüsse durch eingelegte Metallbüchsen armiert ausgebildet sein.

Der Auslauf aus dem Armaturengrundkörper kann beispielsweise ein Rohranschlussgewinde aufweisen, das in dem Armaturengrundkörper selbst ausgebildet ist oder auch in einem in den Armaturengrundkörper eingesetzten Einsatz ausgebildet ist.

Weitere Merkmale, Einzelheiten und Vorzüge der Erfindung ergeben sich aus den Ansprüchen und der folgenden Beschreibung bevorzugter Ausführungsformen der Erfindung sowie anhand der Zeichnung. Hierbei zeigen:
- Figur 1: eine Draufsicht auf einen Armaturengrundkörper der Sanitärarmatur nach der Erfindung;
- Figur 2: einen Längsschnitt in einer senkrecht zur Zeichnungsebene der Figur 1 verlaufenden Ebene;
- Figur 3: einen Längsschnitt in einer Ebene parallel zur Ebene der Figur 1;
- Figur 4: einen Längsschnitt in einer Ebene parallel zur Figur 2;
- Figur 5: eine Frontansicht einer Sanitärarmatur nach der Erfindung;
- Figur 6: einen Schnitt durch die Sanitärarmatur in der gleichen Ebene wie Figur 3;
- Figur 7: eine Explosionsdarstellung der Einzelteile des Armaturengrundkörpers;
- Figur 8: eine perspektivische Ansicht des zusammengesetzten Armaturengrundkörpers von hinten unten;
- Figur 9: einen Querschnitt durch den Armaturengrundkörper der Figur 8 in Höhe des einen Anschlusses;
- Figur 10: einen Querschnitt durch den Armaturengrundkörper der Figur 8 in Höhe des anderen Anschlusses;
- Figur 11: einen Querschnitt durch den Armaturengrundkörper der Figur 8 in Höhe des Auslasses;
- Figur 12: eine der Figur 3 entsprechende Draufsicht auf eine weitere Ausführungsform;
- Figur 13: die perspektivische Ansicht der Ausführungsform der Figur 12 mit darüber angeordnetem Deckel.

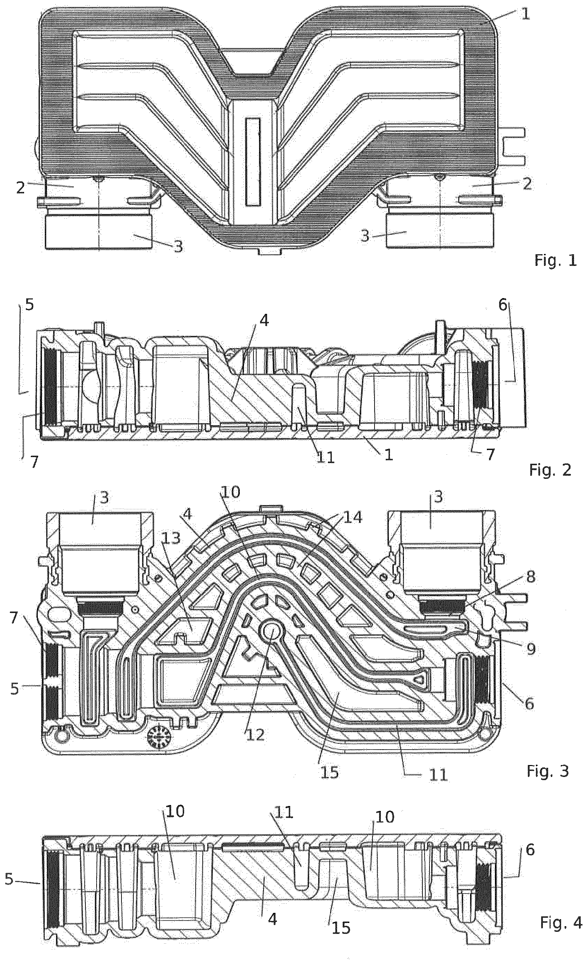

Die Figur 1 zeigt eine Draufsicht auf den Armaturengrundkörper. Von der Oberseite her ist nur ein Deckel 1 zu sehen, der auf der Oberseite eines Anschlussblocks 4 des Armaturengrundkörpers befestigt ist. Die in Figur 1 untere Seite des Armaturengrundkörpers ist die zur Wand hin bestimmte Anschlussseite. Hier bildet der Armaturengrundkörper zwei Anschlussstutzen 2, die jeweils einen gegebenenfalls aus einem anderen Material bestehenden Einsatz 3 aufweisen. Die beiden Einsätze 3 bilden eine Anschlussmöglichkeit zum Anschluss einer Wasserleitung. Sie sind an beiden Enden des Armaturengrundkörpers angeordnet und weisen einen gegenseitigen Abstand auf, der standardmäßig festgelegt ist. Die beiden Einsätze 3 und damit die beiden Anschlüsse weisen jeweils eine Achse auf, wobei die Achsen beider Einsätze 3 parallel zueinander verlaufen.

Die Figur 2 zeigt einen Schnitt in einer Ebene senkrecht zur Zeichnungsebene der Figur 1 in Höhe der Aufnahmen für Ventileinrichtungen. In der Darstellung der Figur 2 ist der Deckel 1 unten angeordnet, während der Anschlussblock 4 des Armaturengrundkörpers dann oberhalb des Deckels 1 dargestellt ist. Links in Figur 2 ist eine Aufnahme 5 für ein Thermostatventil ausgebildet, rechts in Figur 2 eine Aufnahme 6 für ein Mengenregulierventil. Beide Aufnahmen 5, 6 enthalten ein Innengewinde 7 zum Einschrauben des jeweiligen Ventileinsatzes. Der Deckel 1 ist mit dem Anschlussblock 4 des Armaturengrundkörpers beispielsweise verschweißt oder verklebt.

Die Aufnahmen 5, 6 für die jeweiligen Ventileinrichtungen weisen jeweils eine Achse auf, die im dargestellten Beispiel in der gleichen Ebene liegen wie die Achsen der Einsätze 3 für die Wasserleitungen. Allerdings stehen die Achsen der Aufnahmen 5, 6 für die Ventileinrichtung senkrecht zu den Achsen der Anschlüsse für die Wasserleitungen.

Die Figur 3 zeigt jetzt einen Schnitt durch den Anschlussblock 4 des Armaturengrundkörpers in einer Ebene, die parallel zu der Zeichnungsebene der Figur 1 verläuft. In Figur 3 oben sind die Einsätze 3 für die Anschlüsse angeordnet. Man kann sehen, dass die Einsätze 3 in den aus Kunststoff bestehenden Anschlussblock 4 eingesetzt und von diesem umspritzt sind.

Links in Figur 3 ist wieder die Aufnahme 5 für das Thermostatventil dargestellt, und rechts in Figur 3 die Aufnahme 6 für das Mengenregulierventil.

Aus der Aufnahme für den Einsatz 3 für den einen Anschluss der Wasserleitung führt eine Durchbrechung 7 direkt in die Aufnahme 5 für das Thermostatventil. Diese Durchbrechung 7 bildet einen Einlasskanal, der allerdings sehr kurz ist.

Aus der Aufnahme für den rechts in Figur 3 dargestellten Anschluss der zweiten Wasserleitung führt eine Durchbrechung 8 in einen Kanal 9, der sich längs eines Bogens bis zu der Aufnahme 5 für das Thermostatventil erstreckt. Bei diesem Kanal handelt es sich ebenfalls um einen Einlasskanal.

Aus der Aufnahme 5 für das Thermostatventil führt ein Kanal 10 zu der Aufnahme 6 für das Mengenregulierventil. Dieser dient dazu, das das Thermostatventil verlassende Mischwasser, also Wasser mit einer Mischtemperatur, an den Eingang des Mengenregulierventils zu liefern. Es handelt sich bei diesem Kanal also um den Mischwasserkanal. Aus der Aufnahme 6 für das Mengenregulierventil führt ein weiterer Kanal 11 zu einer Öffnung 12 etwa in der Mitte des Armaturengrundkörpers. Dieser Kanal 11 wird von dem Mengenregulierventil angesteuert. Es handelt sich also um den Auslasskanal, da die Öffnung 12 den Auslass aus dem Armaturengrundkörper und damit aus der Sanitärarmatur bildet.

Aus dem Schnitt der Figur 3 kann man erkennen, dass zwischen den Kanälen 9 und 10 Zwischenräume 13 gebildet sind, die durch Rippen 14 teilweise überbrückt sind. Auch zwischen dem Kanal 10 und dem Auslasskanal 11 ist ein Zwischenraum 15 gebildet.

Die Figur 4 zeigt noch mal einen Längsschnitt durch den Armaturengrundkörper. In dieser Darstellung ist der Deckel 1 oben angeordnet. Der Schnitt verläuft in einer Ebene, in der die Achsen der Aufnahmen 5, 6 für die Ventileinrichtung in liegen. Etwa in der Mitte der Figur 4 führt daher der Schnitt durch den Auslasskanal 11. Hier ist zu sehen, dass der Querschnitt des Auslasskanals 11 die Form eines an der Unterseite abgerundeten Rechtecks mit einer Längsachse senkrecht zu der Trennfläche zwischen dem Anschlussblock 4 und dem Deckel 1 aufweist. Die beiden Seitenwände weichen etwas von der Parallelität ab, entsprechend einem Entformungswinkel, der bei der Herstellung des Armaturengrundkörpers durch Kunststoffspritzen üblich ist. Ebenfalls zu sehen ist, dass der Kanal 11 von dem Mischwasserkanal 10 durch den Zwischenraum 15 getrennt ist. Auch der Querschnitt durch den Mischwasserkanal 10 weist die gleiche Form auf wie der Querschnitt durch den Auslasskanal 11. Dies geht aus der Figur 4 nur deswegen nicht klar hervor, da der Schnitt in Längsrichtung des Mischwasserkanals 10 gelegt ist.

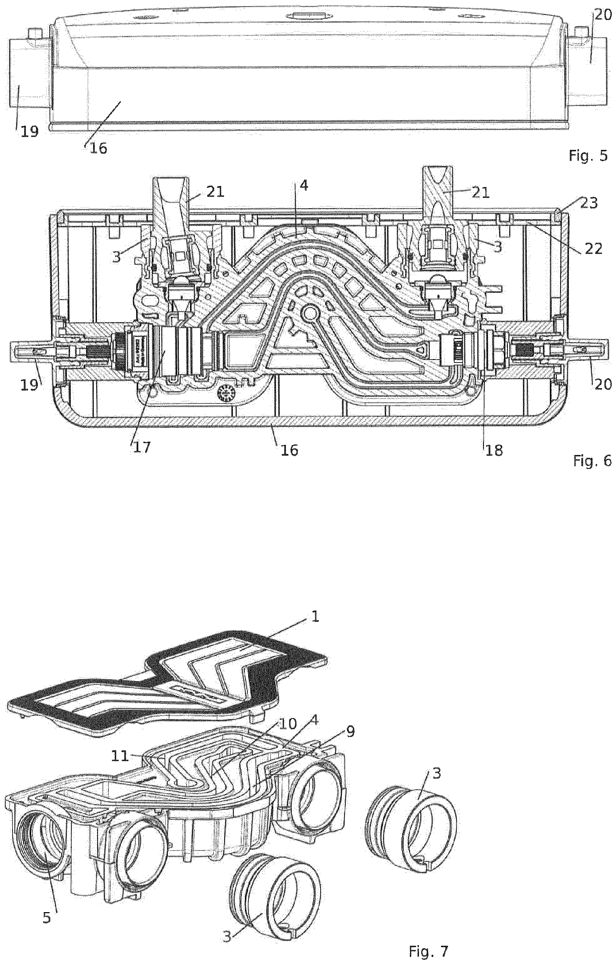

Die Figuren 5 und 6 sind gemeinsam zu betrachten. Während die Figuren 1 bis 4 nur den durch den Deckel 1 abgedeckten Anschlussblock 4 des Armaturengrundkörpers zeigen, zeigen die Figuren 5 und 6 jetzt die Sanitärarmatur mit dem Armaturengrundkörper und den Ventileinrichtungen sowie mit einer den Armaturengrundkörper abdeckenden Rosette 16.

Die Darstellung des Armaturengrundkörpers in der Figur 6 entspricht der Darstellung in Figur 3. In die Aufnahme 5 ist ein Thermostatventil 17 eingesetzt und befestigt. In die Aufnahme 6 ist ein Mengenregulierventil 18 eingesetzt. Beide Ventileinrichtungen weisen ein Betätigungselement in Form eines Knebels 19, 20 auf. In die Einsätze 3 ist jeweils einen S-Anschluss 21 eingesetzt, mit dem die Sanitärarmatur mit der Wasserleitung verschraubt wird. Das Gehäuse 16, auch als Rosette bezeichnet, hat an seiner Rückseite eine Platte 22, die mit einer umlaufenden Dichtung 23 versehen ist. In dieser Form wird die Sanitärarmatur an die Wasserleitung angeschlossen.

Der Benutzer sieht dann die Sanitärarmatur so, wie sie in Figur 5 dargestellt ist. An beiden äußeren Seiten des Gehäuses 16 ragen die Knebel 19, 20 aus dem Gehäuse heraus, mit denen die Armatur bedient wird.

Die Figur 7 zeigt nochmals die Einzelheiten des Armaturengrundkörpers in einer Explosionsdarstellung. Der Armaturengrundkörper besteht aus dem die Wasserführungen enthaltenden Anschlussblock 4 und dem darüber dargestellten Deckel 1. Die beiden Einsätze 3 für die Anschlüsse der Wasserleitungen sind außerhalb des Armaturengrundkörpers dargestellt. Links in Figur 7 ist die Aufnahme 5 für das Thermostatventil angeordnet. Von der Oberseite des unteren Teils des Armaturengrundkörpers sieht man die einzelnen Kanäle 9, 10, 11. Auch hier sieht man die Rechteckform des Querschnitts der Kanäle. Die Kanäle 9, 10, 11 sind vorzugsweise auf ihrer ganzen Länge auf drei Seiten geschlossen und nur zu der Oberseite des Anschlussblocks 4 hin offen und in Richtung Trennfläche zwischen Anschlussblock und Deckel 1 nicht hinterschnitten. Sie werden durch das Anbringen des Deckels 1 geschlossen. Es liegt somit eine asymmetrische Bauform vor, bei der die Kanäle 9, 10, 11 vollständig im Anschlussblock 4 ausgebildet und nur nach oben vom Deckel 1 begrenzt sind.

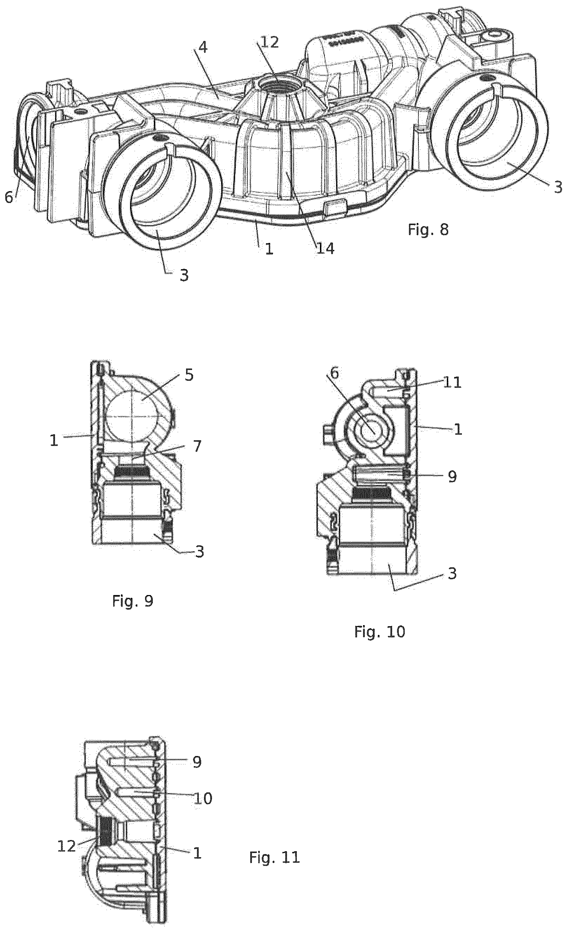

Die Figur 8 zeigt eine perspektivische Ansicht des Armaturengrundkörpers von hinten unten. Die Seitenwände des Einlasskanals 9, die in Figur 8 vorne dargestellt sind, sind durch die bereits erwähnten Rippen 14 verstärkt, wobei die Rippen 14 sich auch zwischen den Seitenwänden der einzelnen Kanäle erstrecken. Weiterhin ist zu sehen, dass der Auslass 12 aus dem Armaturengrundkörper mit einem Gewinde versehen ist.

Die folgenden drei Figuren zeigen nun Querschnitte durch den Armaturengrundkörper. Der Querschnitt der Figur 9 ist durch den einen Anschluss 3 gelegt, und zwar den Anschluss, der über die Durchbrechung 7 zu der Aufnahme 5 für das Thermostatventil 17 führt.

Figur 10 zeigt nun einen Querschnitt in Höhe der Aufnahme 3 am anderen Ende des Armaturengrundkörpers 4, wobei dieser Schnitt auch durch die Aufnahme 6 für das Mengenregulierventil 18 führt. Durch einen Vergleich mit der Figur 3 kann man auch erkennen, dass hier im Schnitt die Kanäle 9 und 11 zu sehen sind, die beide als Flachkanal ausgebildet und zu der Trennfläche zwischen dem Anschlussblock 4 des Armaturengrundkörpers und seinem Deckel 1 offen sind.

Der Schnitt der Figur 11 führt etwa durch die Mitte des Armaturengrundkörpers. Auch hier ist die angenähert rechteckige Form des Einlasskanals 9 und des Mischwasserkanals 10 zu sehen.

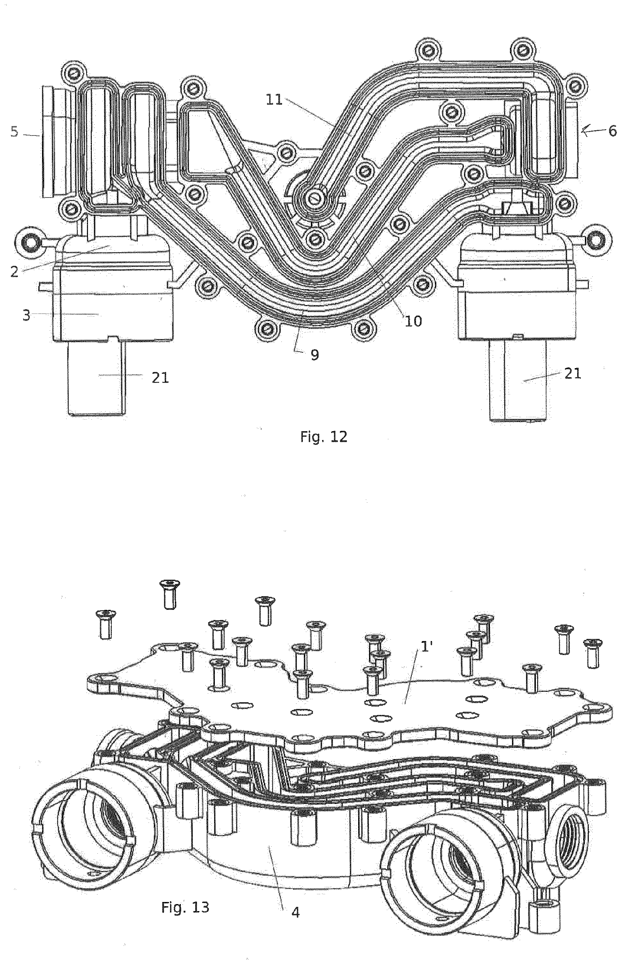

Die Figur 12 zeigt eine der Figur 3 entsprechende Draufsicht auf eine weitere Ausführungsform, bei der die gleichen Bauteile mit den gleichen Bezugszeichen versehen sind. An den Außenseiten der Seitenwände der Kanäle sind zylindrische Stutzen angeordnet, die zur Aufnahme von Schrauben dienen. Wie man der Explosionsdarstellung der Figur 13 entnehmen kann, werden die hier ebenfalls parallel zur Trennfläche zwischen dem Armaturengrundkörper 4 und dem Deckel 1 verlaufenden Kanäle 9, 10, 11 durch einen Deckel 1' abgedeckt, der mithilfe von Schrauben an dem Anschlussblock 4 des Armaturengrundkörpers festgeschraubt wird.

## Patentansprüche

1. Armaturengrundkörper für eine Sanitärarmatur, mit
- einem Anschlussblock (4) und einem mit diesem längs einer Trennfläche verbundenen Deckelblock (1),
- einem am Anschlussblock vorgesehenen Anschlussbereich mit mindestens zwei Anschlüssen zur Verbindung mit je einer Wasserleitung,
- mindestens einer am Anschlussblock vorgesehenen Aufnahme (5, 6) für eine Ventileinrichtung,
- einem Anschluss für einen Auslauf (12) aus der Sanitärarmatur und
- Kanälen (9, 10, 11) zwischen den Anschlüssen, der Ventileinrichtung und dem Auslauf (12), die in dem Armaturengrundkörper ausgebildet sind,
- wobei die Kanäle (9, 10, 11) in Richtung auf die Trennfläche hin offen und durch den Deckelblock (1) geschlossen und in Richtung auf die Trennfläche nicht hinterschnitten sind und mindestens ein Kanal parallel zu der Trennfläche verläuft,
- wobei der Armaturengrundkörper eine asymmetrische Bauform besitzt, bei welcher die mindestens zwei Anschlüsse zur Verbindung mit je einer Wasserleitung vollständig am Anschlussblock (4) ausgebildet und die Kanäle (9, 10, 11) vollständig im Anschlussblock ausgebildet und nur in Richtung auf die Trennfläche hin durch den Deckelblock (1) geschlossen sind.

2. Armaturengrundkörper nach Anspruch 1 bei dem eine Aufnahme (5) für ein Mischventil oder ein Thermostatventil (17) vorgesehen ist, die über jeweils einen Einlasskanal (9) mit den beiden Anschlüssen verbunden ist, und von der ein Mischwasserkanal (10) zu einer Aufnahme (6) für ein Mengenregulierventil (18) führt, die über einen Auslasskanal (11) mit dem Auslauf (12) verbunden ist.

3. Armaturengrundkörper nach einem der vorhergehenden Ansprüche, bei dem der mindestens eine Kanal (9, 10, 11) als Flachkanal mit zwei mindestens angenähert parallelen Wänden ausgebildet ist, wobei die Längsrichtung des Querschnitts des Flachkanals senkrecht zu der Trennfläche zwischen Deckel (1) und Anschlussblock (4) verläuft.

4. Armaturengrundkörper nach einem der vorhergehenden Ansprüche, bei dem mehrere Kanäle (9, 10, 11) zu der gleichen Seite des Anschlussblocks (4) hin offen sind und vorzugsweise alle Kanäle (9, 10, 11) durch den gleichen Deckel (1) abgeschlossen sind.

5. Armaturengrundkörper nach einem der vorhergehenden Ansprüche, mit mindestens zwei in Richtung auf zwei verschiedene Seiten des Anschlussblocks (4) hin offenen Kanälen, die jeweils durch einen Deckel abgeschlossen sind, wobei insbesondere die beiden Seiten des Anschlussblocks (4) einander gegenüber liegen.

6. Armaturengrundkörper nach einem der vorhergehenden Ansprüche, bei dem die Achsen der Aufnahmen (5, 6) für die Ventileinrichtung in der gleichen Ebene liegen wie die Achsen der Anschlüsse oder in einer dazu parallel versetzten Ebene.

7. Armaturengrundkörper nach einem der vorhergehenden Ansprüche, bei dem die Aufnahmen (5, 6) für die Ventileinrichtung derart angeordnet sind, dass ihre Achsen senkrecht zu den Achsen der Anschlüsse verlaufen.

8. Armaturengrundkörper nach einem der vorhergehenden Ansprüche, bei dem die Kanäle (9, 10, 11) kreuzungsfrei verlaufen, insbesondere teilweise parallel zueinander.

9. Armaturengrundkörper nach einem der vorhergehenden Ansprüche, bei dem der Anschlussblock (4) einstückig ausgebildet ist.

10. Armaturengrundkörper nach einem der vorhergehenden Ansprüche, bei dem die Wände der Kanäle (9, 10, 11) in dem Armaturengrundkörper (4) durch Zwischenräume getrennt sind, wobei gegebenenfalls die Kanalwände durch Rippen (14) verstärkt und/oder verbunden sind.

11. Armaturengrundkörper nach einem der vorhergehenden Ansprüche, wobei er ganz oder teilweise aus Metall und/oder ganz oder teilweise aus Kunststoff besteht.

12. Armaturengrundkörper nach einem der vorhergehenden Ansprüche, bei dem die Anschlüsse des Armaturengrundkörpers (4) zur Aufnahme von S-Anschlüssen (21) ausgebildet sind und/oder Einsätze (3) zur Aufnahme von S-Anschlüssen (21) aufweisen.

13. Armaturengrundkörper nach einem der vorhergehenden Ansprüche, bei dem die Anschlüsse glatte Wände aufweisen und/oder bei dem alle Anschlüsse durch eingelegte Metallbüchsen armiert ausgebildet sind.

14. Armaturengrundkörper nach einem der vorhergehenden Ansprüche, bei dem der Anschluss für den Auslauf (12) ein Rohranschlussgewinde aufweist, gegebenenfalls innerhalb eines eingesetzten Einsatzes.

## Claims

1. Fitting base body for a sanitary fitting, having
- a connector block (4) and a cover block (1) connected to said connector block along a parting surface,
- a connector region provided on the connector block with at least two connectors for connection to in each case one water line,
- at least one receptacle (5, 6) for a valve device provided on the connector block,
- a connector for an outlet (12) from the sanitary fitting, and
- ducts (9, 10, 11) between the connectors, the valve device and the outlet (12), which ducts are formed in the fitting base body,
- wherein the ducts (9, 10, 11), in the direction towards the parting surface, are open and are closed off by the cover block (1) and, in the direction of the parting surface, do not have an undercut and at least one duct runs parallel to the parting surface,
- wherein the fitting base body has an asymmetrical structural shape in which at least two connectors for connection to in each case one water line are completely formed on the connector block (4) and the ducts (9, 10, 11) are completely formed in the connector block and are closed off by the cover block (1) only in the direction towards the parting surface.

2. Fitting base body according to claim 1, wherein a receptacle (5) for a mixing valve or a thermostat valve (17) is provided, which receptacle is connected to the two connectors via in each case one inflow duct (9), and from which receptacle a mixed-water duct (10) leads to a receptacle (6) for a flow-rate regulating valve (18), which is connected to the outlet (12) via an outflow duct (11).

3. Fitting base body according to any of the preceding claims, wherein the at least one duct (9, 10, 11) is in the form of a flat duct with two at least approximately parallel walls, wherein the longitudinal direction of the cross section of the flat duct runs perpendicular to the parting surface between cover (1) and connector block (4).

4. Fitting base body according to any of the preceding claims, wherein multiple ducts (9, 10, 11) are open towards the same side of the connector block (4), and preferably all of the ducts (9, 10, 11) are closed off by the same cover (1).

5. Fitting base body according to any of the preceding claims, having at least two ducts which are open in the direction of two different sides of the connector block (4), which are each closed off by a cover, wherein preferably the two sides of the connector block (4) are situated opposite one another.

6. Fitting base body according to any of the preceding claims, wherein the axes of the receptacles (5, 6) for the valve device are situated in the same plane as the axes of the connectors, or in a plane parallel and offset with respect to the aforementioned plane.

7. Fitting base body according to any of the preceding claims, wherein the receptacles (5, 6) for the valve device are arranged such that their axes run perpendicular to the axes of the connectors.

8. Fitting base body according to any of the preceding claims, wherein the ducts (9, 10, 11) run without crossing one another, preferably partially parallel to one another.

9. Fitting base body according to any of the preceding claims, wherein the connector block (4) is a one-piece component.

10. Fitting base body according to any of the preceding claims, wherein the walls of the ducts (9, 10, 11) in the fitting base body (4) are separated by intermediate spaces, wherein the duct walls are reinforced and/or connected by ribs (14), if appropriate.

11. Fitting base body according to any of the preceding claims, wherein the body is completely or partially made of metal and/or completely or partially made of synthetic material.

12. Fitting base body according to any of the preceding claims, wherein the connectors of the fitting base body (4) are formed for receiving S-type connectors (21) and/or have inserts (3) for receiving S-type connectors (21).

13. Fitting base body according to any of the preceding claims, wherein the connectors have smooth walls and/or wherein all of the connectors are reinforced by inlaid metal bushings.

14. Fitting base body according to any of the preceding claims, wherein the connector for the outlet (12) has a pipe connector thread, if appropriate, within an inserted insert.

## Revendications

1. Corps de base de robinetterie pour une robinetterie sanitaire, comportant
- un bloc de raccordement (4) et un bloc de recouvrement (1) relié à celui-ci le long d'une surface de séparation,
- une zone de raccordement prévue sur le bloc de raccordement et comprenant au moins deux raccords pour la liaison respectivement avec une conduite d'eau,
- au moins une admission (5, 6) prévue sur le bloc de raccordement pour un dispositif formant vanne,
- un raccord pour une sortie (12) de la robinetterie sanitaire, et
- des canaux (9, 10, 11) entre les raccords, le dispositif formant vanne et la sortie (12) qui sont formés dans le corps de base de robinetterie,
- dans lequel les canaux (9, 10, 11) sont ouverts en direction vers la surface de séparation et fermés par le bloc de recouvrement (1) et ils ne sont pas en contre-dépouille en direction vers la surface de séparation et au moins un canal s'étend parallèlement à la surface de séparation,
- dans lequel le corps de base de robinetterie possède une configuration asymétrique dans laquelle lesdits au moins deux raccords pour la liaison respectivement avec une conduite d'eau sont formés intégralement sur le bloc de raccordement (4) et les canaux (9, 10, 11) sont formés intégralement dans le bloc de raccordement et ne sont fermés qu'en direction vers la surface de séparation par le bloc de recouvrement (1).

2. Corps de base de robinetterie selon la revendication 1,
dans lequel est prévu une admission (5) pour une vanne mélangeuse ou une vanne thermostatique (17), qui est reliée aux deux raccords par un canal d'entrée respectif (9) et depuis laquelle un canal d'eau mélangée (10) mène jusqu'à une admission (6) pour une vanne de régulation de débit (18), qui est reliée à la sortie (12) par un canal de sortie (11).

3. Corps de base de robinetterie selon l'une des revendications précédentes, dans lequel ledit au moins un canal (9, 10, 11) est formé sous forme de canal plat ayant deux parois qui sont au moins sensiblement parallèles l'une à l'autre, la direction longitudinale de la section transversale du canal plat s'étendant perpendiculairement à la surface de séparation entre le couvercle (1) et le bloc de raccordement (4).

4. Corps de base de robinetterie selon l'une des revendications précédentes, dans lequel plusieurs canaux (9, 10, 11) sont ouverts vers le même côté du bloc de raccordement (4) et de préférence tous les canaux (9, 10, 11) sont refermés par le même couvercle (1).

5. Corps de base de robinetterie selon l'une des revendications précédentes, comportant au moins deux canaux qui sont ouverts en direction vers deux côtés différents du bloc de raccordement (4) et qui sont refermés chacun par un couvercle, et en particulier les deux côtés du bloc de raccordement (4) sont en regard l'un de l'autre.

6. Corps de base de robinetterie selon l'une des revendications précédentes, dans lequel les axes des admissions (5, 6) pour le dispositif formant vanne se trouvent dans le même plan que les axes des raccords, ou dans un plan décalé parallèlement à celui-ci.

7. Corps de base de robinetterie selon l'une des revendications précédentes, dans lequel les admissions (5, 6) pour le dispositif formant vanne sont agencées de telle sorte que leurs axes s'étendent perpendiculairement aux axes des raccords.

8. Corps de base de robinetterie selon l'une des revendications précédentes, dans lequel les canaux (9, 10, 11) s'étendent sans se croiser, en particulier en partie parallèlement les uns aux autres.

9. Corps de base de robinetterie selon l'une des revendications précédentes, dans lequel le bloc de raccordement (4) est formé d'un seul tenant.

10. Corps de base de robinetterie selon l'une des revendications précédentes, dans lequel les parois des canaux (9, 10, 11) dans le corps de base de robinetterie (4) sont séparées par des intervalles, et le cas échéant les parois des canaux sont renforcées et/ou reliées par des nervures (14).

11. Corps de base de robinetterie selon l'une des revendications précédentes, qui est constitué complètement ou partiellement en métal et/ou complètement ou partiellement en matière plastique.

12. Corps de base de robinetterie selon l'une des revendications précédentes, dans lequel les raccords du corps de base de robinetterie (4) sont formés pour recevoir des raccords en S (21) et/ou présentent des inserts (3) pour recevoir des raccords en S (21).

13. Corps de base de robinetterie selon l'une des revendications précédentes, dans lequel les raccords présentent des parois lisses et/ou dans lequel tous les raccords sont formés de façon renforcée par des douilles métalliques intégrées.

14. Corps de base de robinetterie selon l'une des revendications précédentes, dans lequel le raccord pour la sortie (12) présente un raccord de tuyauterie fileté, le cas échéant à l'intérieur d'un insert mis en place.
